# EUROPEAN PATENT SPECIFICATION

(11) **EP 2 767 803 B1**
(45) Date of publication and mention of the grant of the patent: **25.05.2016**
(21) Application number: 13000821.2
(22) Date of filing: 18.02.2013
(51) Int. Cl.: G01C 21/36

(54) **Method and system for navigation**
Verfahren und System zur Navigation
Procédé et système de navigation

(43) Date of publication of application: 20.08.2014
(73) Proprietor: Harman Becker Automotive Systems GmbH, 76307 Karlsbad (DE)
(72) Inventor: Roth, Hans, 76187 Karlsruhe (DE); Acker, Robert, Redwood City, 94065 (CA); Reifenrath, Christoph, 50374 Erftstadt (DE); Ognibeni, Alexander, 50670 Köln (DE)
(74) Representative: Grünecker Patent- und Rechtsanwälte PartG mbB

(56) References cited:
- DE-A1-102011 101 189
- US-A1- 2007 040 701
- US-A1- 2012 200 430
- US-B1- 8 063 797

## Description

The present invention relates to a method and a system for navigation of vehicles.

Methods for assisting a driver in finding a parking spot are known from documents US 8 063 797 B1, US 2007/040701 A1, DE 10 2011 101189 A1 and US 2012/200430 A1.

The document US 2002/0184062 A1 shows a vehicle management system. The vehicle management method and system is able to monitor and manage a fleet of vehicles with high efficiency and low cost. The management method includes the steps of providing a radio transmitter connected to a vehicle navigation system in each vehicle, providing a radio transmitter connected to a facility computer in a vehicle management facility, receiving information regarding use of a vehicle by the vehicle navigation system from the facility computer which is transmitted through the radio transmitters, monitoring usage of the vehicle and storing data thereof in a memory, and sending the stored data to the facility computer through the radio transmitters.
The object of the invention is to improve a method for navigation of vehicles.
Said object is achieved by a method with the features of independent claim 1. Advantageous refinements are the subject of dependent claims and are included in the description.
Therefore a method for navigation is provided. The method is based on a plurality of vehicles connectable to a server. The method comprises the steps:
- determining a current position of a vehicle of the plurality of vehicles; the vehicle may be moving;
- determining a vacancy for parking based on recognized objects at the roadside by an object recognition device of the vehicle;
- transmitting of positions of vacancies from the vehicle to the server; for the transmission the vehicle is connected to the server;
- storing the positions of vacancies by the server;
- determining an input of a query of vacancies for parking by a user;
- transmitting the query together with a final destination from the user to the server;
- calculating a vacancy allocation by minimizing walking distances between final destinations and the positions of the vacancies for a plurality of vehicles having final destinations adjacent to each other; and
- transmitting positions of the vacancies in an area around the final destination from the server to the user for navigation.

These features lead to a plurality of advantages. Members of the community save fuel and time for the search of a vacancy for parking. They reach their destination earlier and the overall effectiveness of community traffic is increased. Also the distance between the parking and the final destination can be optimized.
According to another aspect a system for navigation is provided having the features of independent claim 8. The system for navigation is suitable for a plurality of vehicles. Advantageous refinements are included in the description.

The system comprises a server, connectable to the vehicles via a network, e.g. UMTS-network or LTE-network. The server is configured to receive positions of vacancies for parking, the vacancies being determined by object recognition and sent by the vehicle.
The server is configured to store the received positions of vacancies in a storage.

The server is configured to receive a request for vacancies entered by a user and is configured to receive a respective final destination.
The server is configured to send positions of vacancies in an area around the final destination to the user.

According to the invention, a vacancy allocation is calculated by minimizing walking distances between final destinations and the positions of the vacancies for a plurality of vehicles having final destinations adjacent to each other. The positions of the vacancies in the area are transmitted based on the vacancy allocation. In the following advantageous embodiments are described.

According to one embodiment a selection of a vacancy for parking may be determined to be a new final destination. A route guidance may be started to the new final destination.
According to one embodiment a selection of a vacancy for reservation may be determined. Reservation information may be sent from the user to the server.
According to one embodiment the user may be authenticated to be a member of a group legitimated to retrieve vacancies. The positions may be transmitted after succeeding the authentication.
According to one embodiment occupation information may be sent from the user to the server, if the position is occupied by another vehicle or if a reaching of the position by the user is determined. The stored position may be deleted by the server respectively.
According to one embodiment a length of the vacancy may be determined. Lengths along with positions of vacancies may be transmitted from the vehicle to the server. Each vacancy may be selected depending on its lengths. The central unit may be configured to output only said vacancies that are sufficiently larger than the length of the vehicle, so that the vehicle may fit into the vacancy.

According to one embodiment a point in time of the determination of the vacancy may be determined. The point of time along with the position of the vacancy may be stored by the server. Positions of vacancies and respective points of time may be transmitted from the server to the user.

Depending on the point of time and the current time, the actuality may be visualized.

The described embodiments are especially advantageous both individually and in combination. In this regard, all embodiments can be combined with one another. Some possible combinations are explained in the description of the exemplary embodiments shown in the figures. These possible combinations of the embodiments, depicted therein, are not definitive, however.

The invention will be described in greater detail hereinafter by exemplary embodiments using graphic illustrations.

In the drawing:
- FIG. 1: shows a schematic illustration of a system for navigation of vehicles;
- FIG. 2: shows a schematic illustration of a map view;
- FIG. 3: shows a schematic illustration of the wireless transmission;
- FIGS. 4a, 4b, and 4c: show schematic illustrations of selection options;
- FIG. 5: shows a schematic time diagram;
- FIG. 6: shows a schematic illustration of a display;
- FIG. 7: shows a block diagram;
- FIG. 8: shows a schematic three-dimensional illustration of a motor vehicle;
- FIG. 9: shows a block diagram;
- FIG. 10: shows a schematic view of a traffic having a plurality of vehicles according to an embodiment of the invention. and
- FIG. 11: shows a schematic map view according to an embodiment of the invention.

A rapid growth of urban population occurred in recent decades. In 2008, around the globe for the first time less people lived in rural than in urban areas. More than four hundred cities have more than one million and nineteen more than ten million inhabitants. In the forecast by 2050 more than seventy percent of the world population will live urban areas. In the mega cities of the future there will be an enormous need for mobility, that can't be satisfied with conventional means. This gap can be closed by the Urban Swarm Community Concept, which consistently uses the intelligence of the swarm. Using the Urban Swarm Community Concept a cutting-edge mobility community combines the advantages of public and individual transport, taxis, car-sharing and ride community concepts, avoiding their disadvantages. It offers maximum transport capacity by high utilization of vehicles and also allows a rapid change of vehicles. Potential passengers only need to enter their final destination, the rest is managed by the System. In this concept individuals may be booked on one or several vehicles to come from start point to final destination.

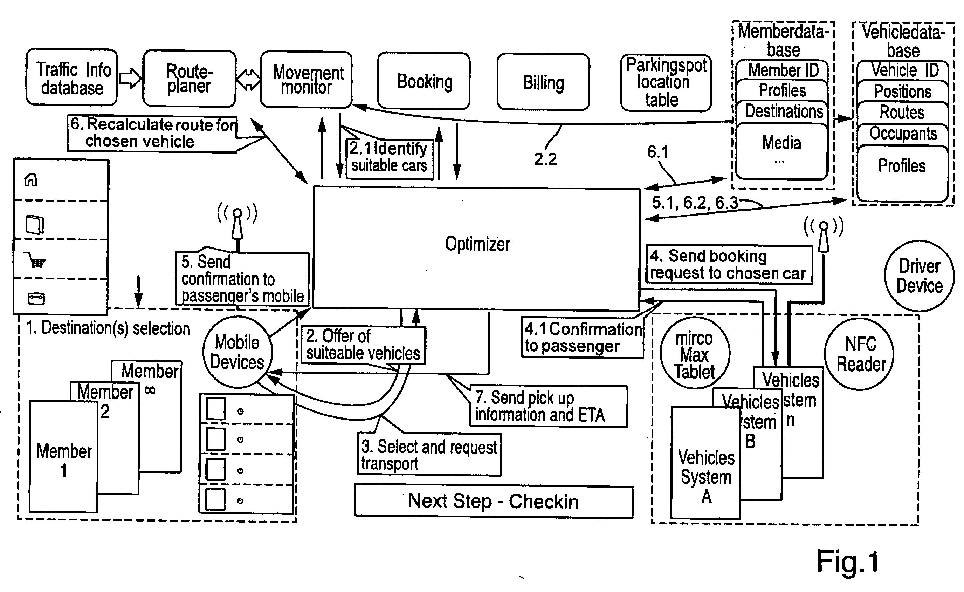

In FIG. 1 an overview of one embodiment of a system is provided, that uses swarm intelligence. Therefore a plurality of functions in FIG. 1 may be implemented in program running on one or more servers, which could be part of a cloud computing.
Core of the system of FIG. 1 is an optimizer function for organizing data traffic and calculations. Implemented functions may be a traffic info database having data of a road map, a route planer having a route calculation algorithm and a movement monitor having storage means for updating and tracking the positions of the member devices and vehicles. Also implemented functions may be booking having storage means e.g. for passenger transport, and billing for member vehicle usage and a parking spot location table having positions of vacancies for parking. Also implemented functions may be a member database and a vehicle database. The member database may have members' identifications, members' profiles, members' destinations and members' media. The vehicle database may have vehicles' identification, vehicles' positions, vehicles' routes, vehicles' occupants and vehicles' profiles.

Also member device functions on the left as well as specific member functions of a vehicle on the right are shown. According to one embodiment of FIG. 1 steps of a long-term booking process are described.

In a first step a member may select a destination, e.g. home, school market or office. The destination is sent as an enquiry to the optimizer by the mobile device of the member. The optimizer returns in a second step an offer of suitable vehicles, which may be shown in a table form on the display of the mobile device, having pictures and text and other information like known persons or driving time. Suitable vehicles may be determined based on the information in the movement monitor. Also billing requirements may have to be fulfilled for offering. In a third step the user selects at least one of the suitable offers and sends a request for transport.

In a fourth step the booking request is sent to the driver's mobile of the respective choice. The driver inputs an acknowledgement, if he agrees to transport the member, which is referred to as passenger in the following. Information from the member database and from the vehicle database may be provided for the request and confirmation and selection to the passenger's device and to the driver's device respectively. This confirmation is sent back to the optimizer and is forwarded to the passenger's mobile device. The booking is stored and monitored in the booking function. The optimizer also triggers the route planer to recalculate a route of the vehicle of choice, incorporating an additional stop for the passenger to enter the vehicle and/or an additional stop for the passenger to leave the vehicle. The routes stored in the vehicle database may be updated. In a seventh step after route recalculation pick up information and an estimated time of arrival is sent to the passenger.

Other process not shown in FIG. 1 may be a check-in, a check-out, short-term booking, dynamic wake-up call for a driver, dynamic wake-up call for a passenger, parking management and a private mode. E.g. after the long-term booking the next process would be the check-in of the passenger in the vehicle of choice.

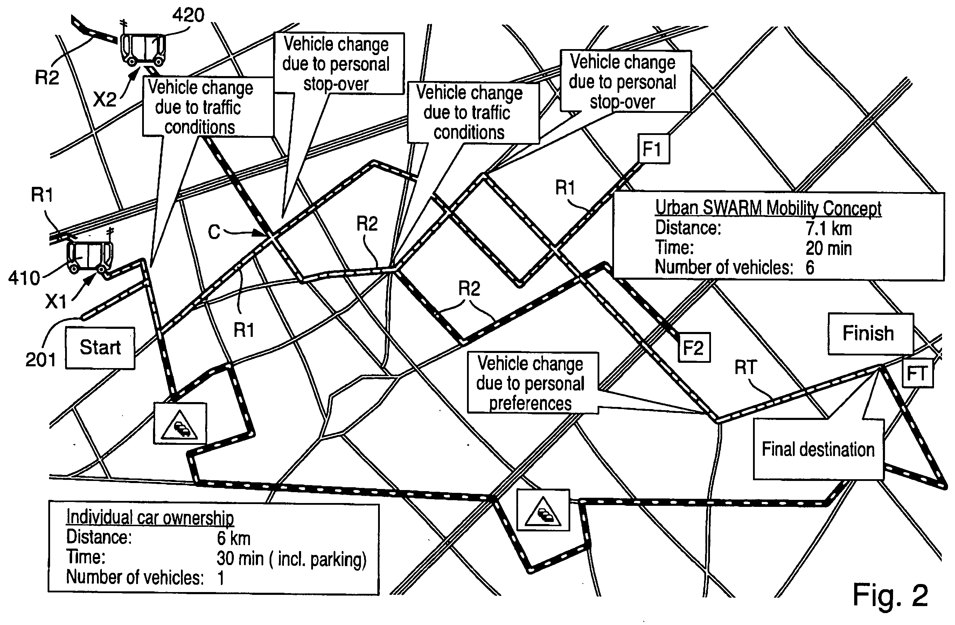

A map view is shown schematically in FIG. 2. The map view should clarify the different use of a swarm of vehicles versus an individual vehicle. Typically, a swarm consists of a large number of vehicles, but for greater clarity only a few vehicles of the swarm are shown in FIG. 2. Thus, a first vehicle 410 and a second vehicle 420 are shown in FIG. 2.

Also shown is a first current position X1 of first vehicle 410, which is determined, for example, by means of GPS signals and transmitted to server 300 according to FIG. 1. Likewise, a second current position X2 of second vehicle 420 is shown, which is also transmitted to server 300.

Also shown are a first route R1 and a second route R2, which are calculated by server 300. The server moreover calculates a large number of other routes of swarm participants, which for greater clarity are not shown in FIG. 2.

The first route R1 is determined from the first current position X1 to a first final destination F1 of first vehicle 410. The first final destination F1 is selected or input, for example, by the driver of first vehicle 410. The second route R2 is determined from the second current position X2 to a second final destination F2 of second vehicle 420. The second final destination F2 is selected or input, for example, by the driver of second vehicle 420.

Passenger 201 has also entered a trip destination FT, which in the exemplary embodiment of FIG. 2 he covers with six route sections by means of six different vehicles. The six route sections in this regard form his trip route RT to the trip destination FT. A second route section in this case is covered by first vehicle 410. A third route section is covered by second vehicle 420. The remaining necessary vehicles are not shown in FIG. 2 for the sake of greater clarity.

So that passenger 201 can utilize first vehicle 410 and then second vehicle 420, passenger 201 must change vehicles. A location C for changing vehicles connects first route R1 and second route R2. This location C is advantageously indicated as a stopover in the route guidance of first vehicle 410. In this regard, information on the exiting of passenger 201 is provided to the driver of first vehicle 410. Location C is advantageously also indicated as a stopover in the route guidance of second vehicle 420. In this case, information on the entry of passenger 201 is provided to the driver of second vehicle 420. Thus, location C is included in first route R1 of first vehicle 410 and in second route R2 of second vehicle 420. Location C in this case is an area where stopping of first vehicle 410 and second vehicle 420 is possible. For example, location C is an intersection, so that passenger 201 need only cross a street for a vehicle change.

Server 300 calculates both routes R1, R2 interdependently based on the trip route RT of passenger 201. First route R1 is transmitted to first vehicle 410 and second route R2 to second vehicle 420. Due to the Swarm mobility concept, in the exemplary embodiment of FIG. 2, passenger 201 can reach the trip destination FT within 20 minutes. Because of the high availability of travel options due to the swarm of vehicles, passenger 201 can also skip travel options, e.g., in order to take a break or to meet someone and then to continue traveling to the trip destination FT. In so doing, the server calculates a new trip route RT with new route sections of the current vehicles (not shown).

For comparison, the trip by means of a person's own motor vehicle from the start to the destination (finish) is also shown in FIG. 2. The traveler as the driver must now drive around a traffic jam at two places, shown in FIG. 2 by symbols. The traveler also loses a great deal of time at the destination when a parking place needs to be found. In the shown exemplary embodiment of FIG. 2, the traveler requires 30 minutes to reach the destination. With the current growth of traffic congestion in cities, individual transport will increasingly reach its limits, so that in the exemplary embodiment of FIG. 2 the time difference will diverge even more greatly.

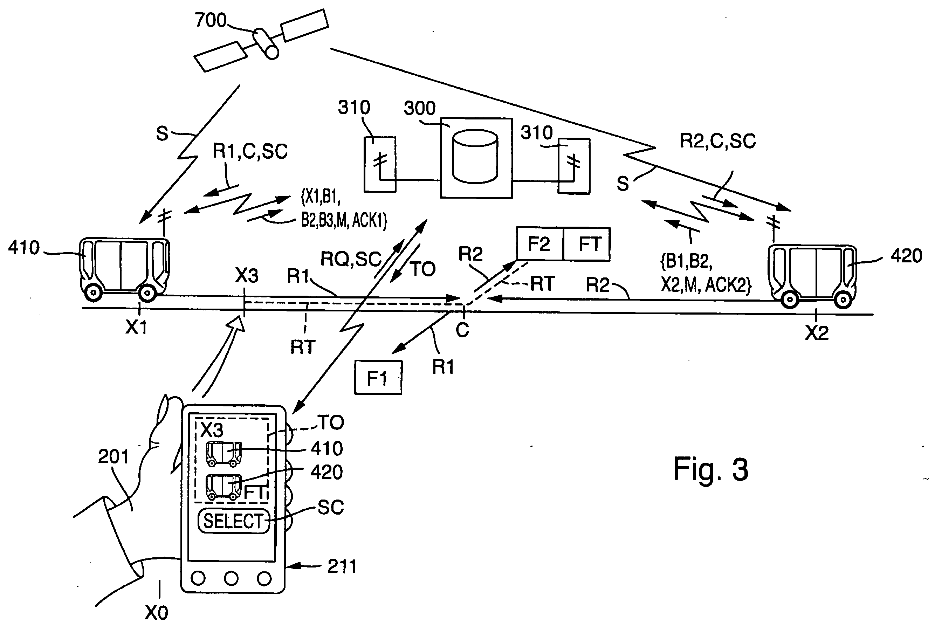

A further exemplary embodiment is illustrated in FIG. 3, in which a passenger 201 reaches a trip destination FT from his current position X0. In this case, passenger 201 uses a mobile device 211 to transmit an enquiry RQ to server 300 via a wireless connection. For the wireless connection, the server is connected, for example, to base station 310 of a wireless network (LTE, UMTS) in the network. The enquiry RQ contains a current passenger position X0 of passenger 201 and the passenger destination FT.

Server 300 moreover receives information on vehicles 410, 420. A first vehicle 410 determines its current position X1 based on satellite signals S from satellites 700 and transmits its current position X1 and its destination F1 and first parameters B1, B2, B3, M via a wireless connection to server 300. A second vehicle 420 determines its current position X2 based on satellite signals S from satellites 700 and transmits its current position X2 and its destination F2 and second parameters B1, B2, M via a wireless connection to server 300.

The first parameters B1, B2, B3, M and the second parameters B1, B2, M define whether the particular vehicle 410, 420 is suitable for transporting passenger 201. For example, one of the parameters defines a mode value M for a private mode without transport of passengers or a public mode with transport of passengers, whereby the mode value M can be set by the driver. In the exemplary embodiment of FIG. 3, the drivers of vehicles 410, 420 have set the public mode. Furthermore, an occupancy value B1, B2, B3 for the number of free transport places in motor vehicle 410, 420 is transmitted as a parameter. In the exemplary embodiment of FIG. 3, first vehicle 410 has transport places B1 and B2 and B3 free and second vehicle 420 transport places B1 and B2.

A transport option TO of a transport of passenger 201 to the passenger destination FT by means of first vehicle 410 and second vehicle 420 is determined by server 300. The determination of transport option TO is based on at least one of the current passenger position X0 and the first current position X1 of first vehicle 410 and the second current position X2 of second vehicle 420 and the first route R1 and the second route R2 and a first number of first parameters B1, B2, B3, M transmitted from first vehicle 410 for transport option TO and a second number of second parameters B1, B2, M transmitted from second vehicle 420 for transport option TO.

Transport option TO is transmitted by server 300 via a wireless connection to mobile device 211 of passenger 201. Mobile device 211 of passenger 201 has a display for showing transport option TO. Data such as the pick-up point X3 and/or information on the driver and/or vehicles and/or on the trip destination FT, for example, are shown on the displaying of transport option TO. Mobile device 211 enables a selection input SC of this transport option FT, for example, by icon and/or key command and/or voice command. In the exemplary embodiment of FIG. 3, the selection input SC can be made by touching the icon "SELECT" via a touchscreen. The selection input SC is transmitted back to server 300. Next, server 300 calculates the first route R1 of first vehicle 410 and the second route R2 of second vehicle 420 and the location C.

Passenger 201 after the selection SC goes from his current position X0 to pick-up point X3, which first vehicle 410 reaches at the same time or shortly thereafter and gets into first vehicle 410. First vehicle 410 drives by means of route guidance along route R1. Passenger 201 leaves at location C. Second vehicle 420 also reaches location C at the same time or shortly thereafter and passenger 201 gets into second vehicle 420. Second vehicle 420 drives further along second route R2 to the destination by means of route guidance. In the exemplary embodiment of FIG. 3, the destination F2 of second vehicle 420 corresponds to the trip destination FT of passenger 201.

As a departure from the exemplary embodiment of FIG. 3, a plurality of transport options TO for the selection input SC can be shown on mobile device 211 of passenger 201.

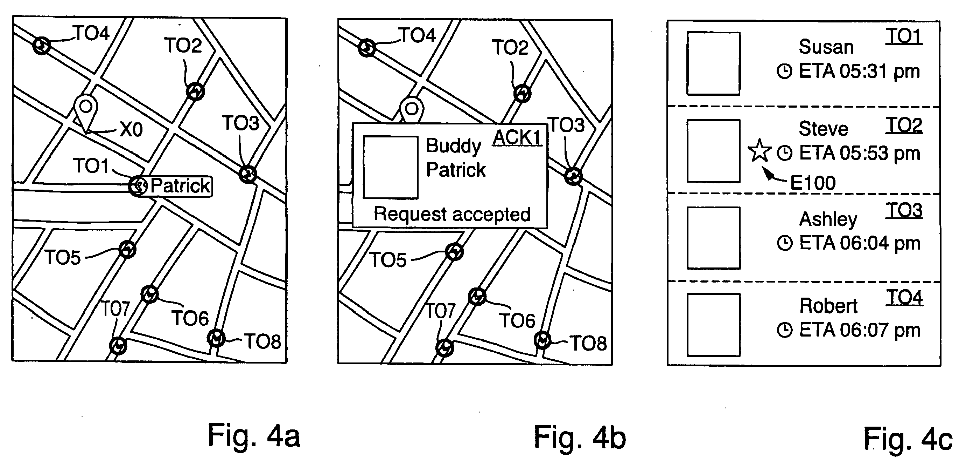

FIG. 4a shows an exemplary embodiment of a display of a plurality of transport options TOl, TO2, TO3, T04, TO5, TO6, TO7, TO8 on a map. Each transport option TO1, TO2, T03, TO4, TO5 TO6, T07, TO8 can be selected by touching the associated symbol on the map. The particular current position X0 is also shown. Additional information E100 is indicated for transport option TO1. In the exemplary embodiment of FIG. 4a, the driver for transport option TO1 is familiar to the user and his name is determined and displayed by means of a table entry.

If transport option TO1 is selected by a touchscreen input, a request RQ, according to FIG. 3, is sent to the vehicle. If the driver of the first vehicle 410 confirms the reservation request, a first acknowledgment message ACK1 is sent back. If the driver of the second vehicle 420 confirms the reservation request, a second acknowledgment message ACK2 is sent back. FIG. 4b shows an exemplary embodiment of a display for a confirmation ACK1 shown on the display of the passenger's device.

FIG. 4c shows an exemplary embodiment of a display of a plurality of transport options TO1, TO2, TO3, T04 for a later time by means of a list. In this case as well, additional information E100 is output, which in the exemplary embodiment of FIG. 4c identifies a familiar person as the driver.

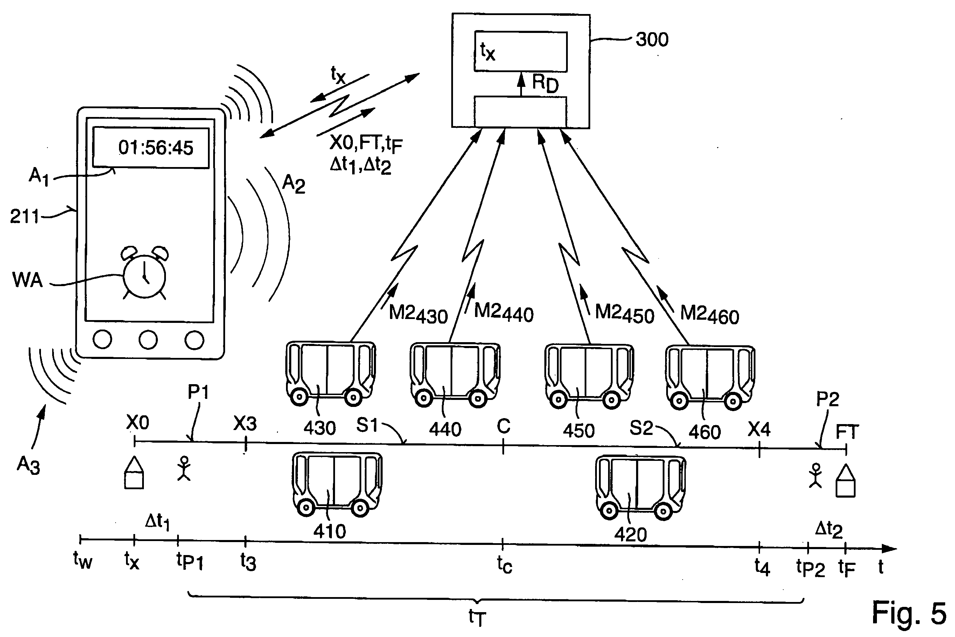

Another exemplary embodiment with a diagram is shown in FIG. 5. A user 201 as passenger 201 is to take a trip from the start position X0 to the trip destination FT. The section covered by the trip from the start position X0 to trip destination FT is shown in FIG. 5 by a bar with the positions X0, X3, C, X4, FT and the sections P1, S1, S2, P2. The system is suitable for schedule planning by the central management of a plurality of data by a server 300. To display the time course, a timeline with the times t_{W}, t_{X}, t_{P1}, t₃, t_{C}, t₄, t_{P2}, t_{F} is shown below the illustration of the trip sections. Passenger 201 uses a mobile device 211, for example, a smartphone or smartbook.

User 201 would like to be at appointment place FT at appointment time t_{F}. Mobile device 211 is configured to input the appointment time t_{F} and the appointment place FT and optional a time interval Δt1, Δt2 by user 201. In the exemplary embodiment of FIG. 5, two time intervals Δt1, Δt2 are entered. A first time interval Δt1 between a start time tₓ and a time t_{P1} at the beginning of footpath P1 is entered. For example, the first time interval Δt1 takes into account a time period for leaving the house (e.g., 5 minutes). The second time interval Δt2, defined between a time of arrival t_{P2} after the end of footpath P2 and the appointment time t_{F}, takes into account, for example, a preparation time for the appointment (e.g., 5 minutes). The time intervals Δt1, Δt2 can also be set to zero.

Mobile device 211 is configured to determine a current position X0 of mobile device 211. For this purpose, mobile device 211 has, for example, a GPS receiver.

Server 300 can be connected to mobile device 211 via a network. For example, a UMTS connection or an LTE connection is used for this purpose. Mobile device 211 is configured to transmit the appointment time t_{F} and the appointment place FT and the current position X0 and the time intervals Δt1, Δt2 to server 300.

Server 300 is configured to determine traffic-related data RD as real-time data RD for at least one route section S1, S2 between the current position X0 and the appointment place FT. In the exemplary embodiment of FIG. 5, user 201 starts a short footpath P1 at the position X0 to location X3 where a first vehicle 410 transports user 201 as passenger 201 over a first route section S1 to location C. At location C passenger 201 changes to second vehicle 420 and is driven over a second route section S2 to location X4. Passenger 201 leaves at location X4 and walks on another short footpath P2 to appointment place FT. How rapidly the first route section S1 and the second route section S2 can be covered depends significantly on traffic flow in these route sections S1, S2. In the exemplary embodiment of FIG. 5, other vehicles 430, 440, 450, 460 are shown which drive on route sections S1, S2.

Server 300 is configured to determine traffic-related data RD of the particular route section S1, S2 based on an assessment of received vehicle-specific data M2₄₃₀, M2₄₄₀, M2₄₅₀, M2₄₆₀ of vehicles 430, 440, 450, 460. The vehicle-specific data are, for example, a speed value M2₄₃₀, M2₄₄₀, M2₄₅₀, M2₄₆₀ and/or an acceleration value and/or a value for the distance to a preceding and/or following vehicle and/or a value for route conditions and/or a vehicle density value. It is shown in the exemplary embodiment of FIG. 5 how vehicles 430, 440, 450, 460 each transmit a speed value M2₄₃₀, M2₄₄₀, M2₄₅₀, M2₄₆₀ to server 300 over a wireless connection.

Server 300 determines a travel time t_{T} based on the data. The time for footpaths P1, P2 in this regard is substantially independent of traffic. From the speed values, server 300 calculates, for example, an average speed in route sections S1, S2 and in association with the length of route sections S1, S2 server 300 calculates the travel time t_{T}. The start time t_{X} can now be calculated by server 300, for example, by subtracting the travel time t_{T} and subtracting the time intervals Δt1, Δt2 from the appointment time t_{F}.

Server 300 is configured, based on the appointment time t_{F} and the appointment place FT and the current position X0 and possibly available time intervals Δt1, Δt2 and the traffic-related real-time data RD, to calculate the start time tₓ for traveling from current position X0 to the appointment place FT. The calculated start time tₓ is sent by server 300 to mobile device 211. Server 300 is configured to update continuously the start time tₓ based on the traffic-related data RD and to send it to mobile device 211. If the traffic situation in route sections S1, S2 changes, for example, due to black ice, this is taken into account in the calculation of the start time tₓ and the start time tₓ is accordingly adjusted forward.

Mobile device 211 is configured to output an alarm A1, A2, A3 based on the start time tₓ and current time t. The alarm in this regard can be output in different ways. In the exemplary embodiment of FIG. 5, the alarm is indicated as a visual display A1 by a countdown. The display can blink in addition, for example, shortly before the start time tₓ is reached. The alarm is output alternatively or in addition by an acoustic signal A2. The acoustic signal A2 is, for example, an alarm sound and/or a voice output. The alarm is output alternatively or in addition by a vibration A3 of mobile device 211.

In addition, a wake-up alarm WA can be set. In this regard, based on the start time tₓ a wake-up time t_{W} can be specified by mobile device 211 and/or server 300. Mobile device 211 in this regard is configured to output the wake-up alarm WA, based on the wake-up time t_{W} and the current time t. The wake-up alarm also has, for example, an alarm sound.

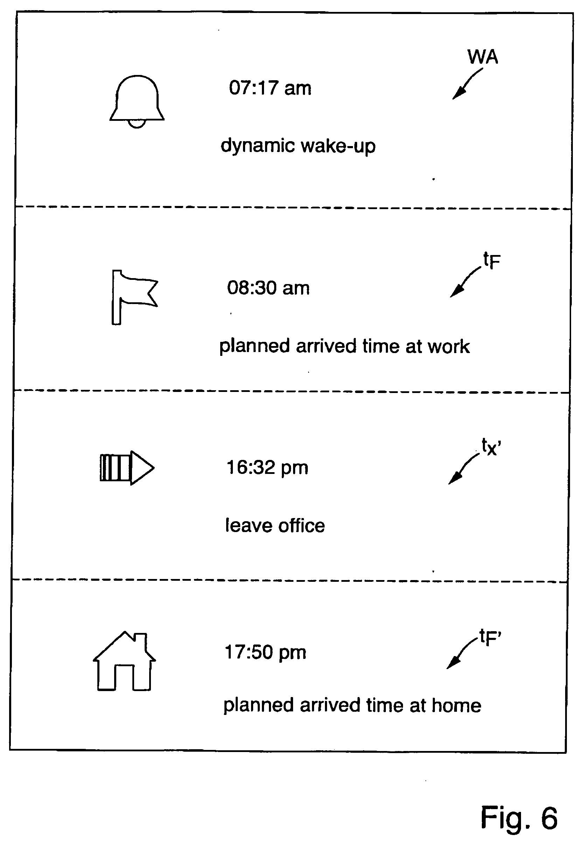

An exemplary embodiment with a display is shown schematically in FIG. 6. In this case, a visual wake-up alarm WA, an appointment time t_{F} at the office, and a start time tₓ' for the return trip and an arrival time t_{F}' at home are indicated. The arrival time t_{F}' could also be referred to as appointment time.

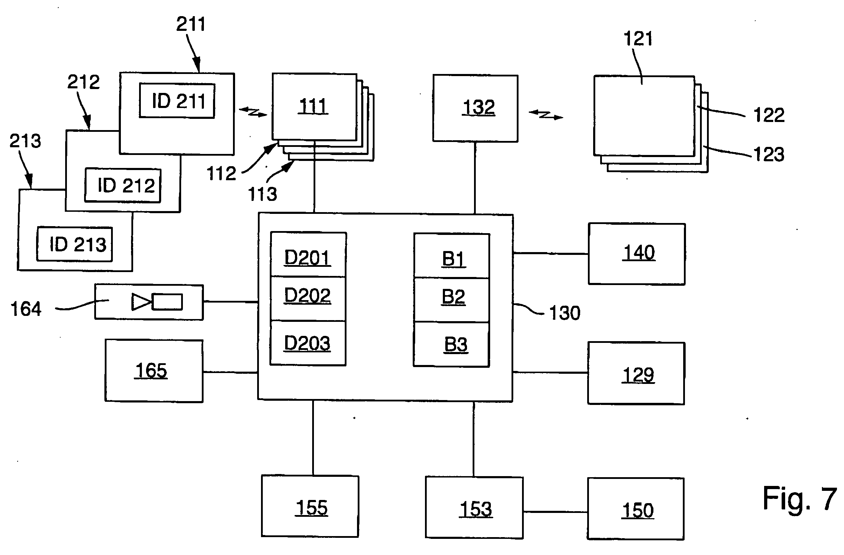

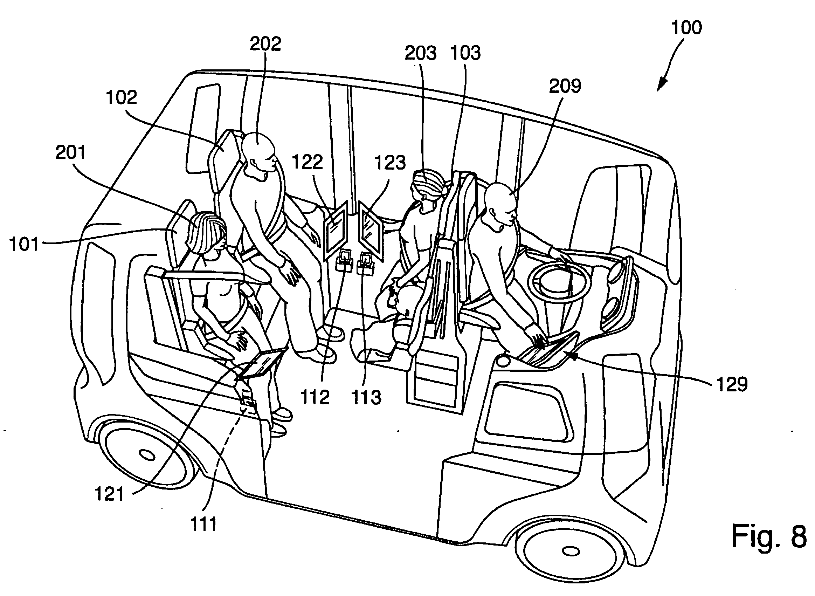

A system of a motor vehicle 100 is shown in FIGS. 7 and 8. The system has a central unit 130. Central unit 130 is connected to a driver terminal 129 for a driver 209 to output a route guidance. Driver terminal 129 is configured for inputting, for example, by means of sensors or a touchscreen. The driver can enter data via driver terminal 129 or he can operate functions.

In the exemplary embodiment of FIG. 8, the system has three near field communication devices 111, 112, 113. Each near field communication device 111, 112, 113 is installed in motor vehicle 100 in the area of a seat for a mobile device 211, 212, 213. Each near field communication device 111, 112, 113 is connected to central unit 130. Each near field communication device 111, 112, 113 can create a communication link with mobile device 211, 212, 213 located in the receptacle.

In the exemplary embodiment of FIG. 8, the system has three display-input devices 121, 122, 123. Each display-input device 121, 122, 123 is installed in motor vehicle 100 for use by a passenger 201, 202, 203. Each display-input device 121, 122, 123 is connected to central unit 130. Near field communication device 111, 112, 113 and display-input device 121, 122, 123 are positioned for operation (operating) by passenger 201, 202, 203 at a passenger seat 101, 102, 103.

Central unit 130 of the system is configured to read identification data ID211, ID212, ID213 from mobile device 211, 212, 213 of passenger 201, 202, 203 via near field communication device 111, 112, 113. In the exemplary embodiment of FIG. 7, the respective identification data ID211, ID212, ID213 are transmitted to central unit 130 from each mobile device 211, 212, 213 of passenger 201, 202, 203 via near field communication devices 111, 112, 113. Driver 209 can allow the identification data ID211, ID212, ID213 to be displayed via terminal 129. It is possible that central unit 130 is configured to transmit the identification data ID211, ID212, ID213 or the information associated therewith to server 300. The information can then be used for billing, e.g. for paying for the traveled sections.

Central unit 130 is configured, based on the identification data ID211, ID212, ID213 from mobile devices 211, 212, 213, to activate display-input device 121, 122, 123 for use by passenger 201, 202, 203. By means of the activation, passenger 201, 202, 203 can now allow data to be displayed or make entries. In the exemplary embodiment of FIG. 7, passenger 201, 202, 203 is authorized to allow image data from camera 164 to be displayed. Likewise, music titles or video titles can be requested from a media database 155. Central unit 130 is configured, based on the identification data ID211, ID212, ID213, to permit access to data and/or services of central unit 130 of motor vehicle 100. Passenger 201, 202, 203 by the activation can also be permitted to access the infrastructure of vehicle 100, for example, a transceiver 140 of the wireless network connection (UMTS, LTE).

Alternatively or in combination, central unit 130 is configured, based on the identification data ID211, ID212, ID213 from mobile devices 211, 212, 213, to transmit passenger-specific data D201, D202, D203 from central unit 130 for displaying on display-input device 121, 122, 123. In the exemplary embodiment of FIG. 7, passenger-specific data D201, D202, D203 are stored or generated in central unit 130. The passenger-specific data D201, D202, D203 have, for example, specific instructions for route guidance for passenger 201, 202, 203. For example, the passenger-specific data D201, D202, D203 have a time counter until passenger 201, 202, 203 leaves motor vehicle 100 at a stop of the route guidance. The time counter is displayed by display-input device 121, 122, 123.

In addition, passenger 201, 202, 203 is provided with the convenient option of accessing his own data, in that central unit 130 is configured, based on the identification data ID211, ID212, ID213, to permit access to data and/or services of mobile device 211, 212, 213 via near field communication device 111, 112, 113. For example, email can be read from mobile device 211, 212, 213 via near field communication device 111, 112, 113.

An occupancy value B1, B2, B3 for the particular seat 101, 102, 103 is changed in central unit 130, based on the identification data ID211, ID212, ID213. As soon as a passenger 201, 202, 203 identifies himself by means of mobile device 211, 212, 213 and the identification data ID211, ID212, ID213 via the particular near field communication device 111, 112, 113, the associated occupancy value B1, B2, B3 is set to "occupied." It is also possible that seat 201, 202, 203 has an occupancy sensor 165, whereby the occupancy value B1, B2, B3 is set based on the sensor data of occupancy sensor 165. Central unit 130 is configured to provide the occupancy value B1, B2, B3 upon an inquiry by server 300 and occupancy values B1, B2, B3 are then transmitted from central unit 130 to server 300. The rider capacities are thus available to server 300 in real time.

So that passenger 201 is informed in a timely manner about changing vehicles before location C is reached according to FIG. 3, in the exemplary embodiment of FIG. 7 central unit 130 is configured, based on the identification data ID211, ID212, ID213, to display a map by means of display-input device 121, 122, 123 with the current position of motor vehicle 100, 410 and/or a position of another motor vehicle 420, whereby the other motor vehicle 420 is assigned a trip route RT of passenger 201.

To connect each display-input device 121, 122, 123 with central unit 130, the system has a WiFi access point 132 for a wireless connection. Moreover, other devices, for example, brought along by a passenger 201, 202, 203, can be included in the system via WiFi access point 132. To output voice prompts and/or entertainment media, the system of the exemplary embodiment of FIG. 7 has a number of audio amplifiers 153 and a number of loudspeakers 150.

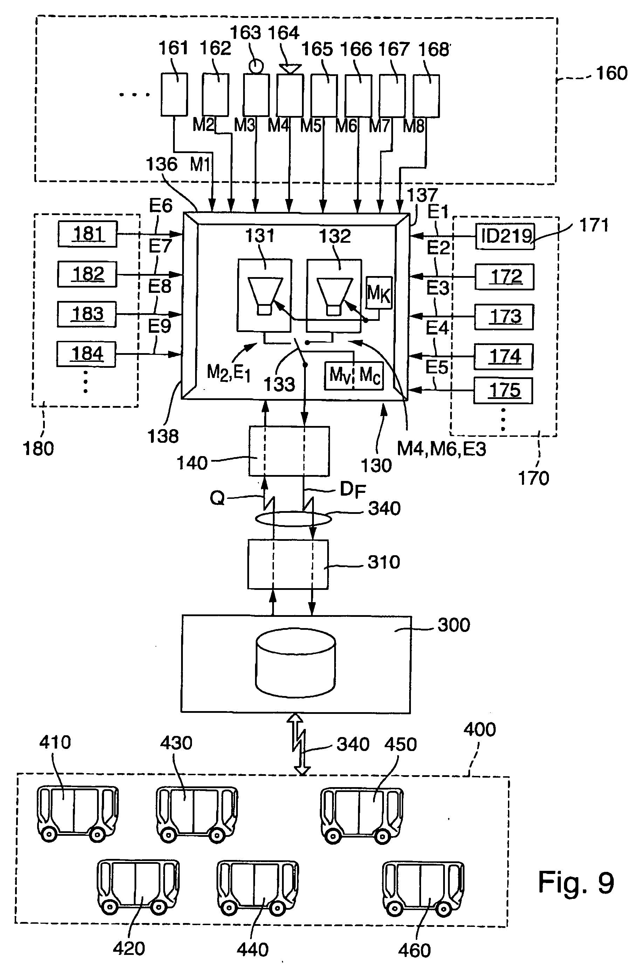

FIG. 9 shows other functions of a system of a motor vehicle 100 in communication with a server 300. The system again has a central unit 130. The system has a transceiver 140 for the wireless transmission of data DF from motor vehicle 100 via a wireless connection 340 of a network, e.g., over a wireless base station 310, to server 300. In addition, a plurality of other vehicles 410, 420, 430, 440, 450, 460, which belong to a community 400, can exchange data with server 300 via a wireless connection 340.

Central unit 130 of the present system has an interface 136 for receiving measured data M1, M2, M3, M4, M5, M6, M7, M8 from measurement sensors 161, 162, 163, 164, 165, 166, 167, 168 of motor vehicle 100. For example, a measurement sensor is a camera 164 and/or a radar device 161 and/or a speed sensor 162 and/or a microphone 163 and/or an occupancy sensor 165 and/or a position sensor 166 and/or a street condition sensor/vibration sensor 168 and/or a temperature sensor 167 or the like.

In the exemplary embodiment of FIG. 9, central unit 100 of the system has an interface 137, 138 for receiving input data E1, E2, E3, E4, E5, E6, E7, E8, E9 of an input by a driver 209 by means of an input device 129 of motor vehicle 100. Input device 129 of driver 209 can also be called the driver terminal 129. The input data in the exemplary embodiment of FIG. 9 have a driver identification E1 with the identification data ID219 and/or a driving style category E3 and/or a group definition E4 and/or a music profile E2 and/or a driving destination E5 and/or a number of available places E6 and/or an input maximum speed E7 and/or a vehicle identification E9 or the like. A number of connected input devices 170, 180 and/or memories 171, 172, 173, 174, 175, 181, 182, 183, 184 are provided for this purpose.

Central unit 130 is configured to activate a private mode M_{V} or a public mode M_{C}. The public mode M_{C} is used here for information for other participants, who, e.g., as passengers require a ride or as a driver of another vehicle would like to be informed about the local situation, for example, by means of image data from camera 164. The private mode M_{V}, in contrast, makes it possible for driver 209 to protect his privacy, when, e.g., exclusively family members travel in the vehicle.

Central unit 130 in the private mode M_{V} is configured to activate a first configurable filter 131. A first selection of measured data M2 and/or of input data E1 for transmission by transceiver 140 is released by means of the first configurable filter 131. In the exemplary embodiment of FIG. 9, the speed data M2 of a speed sensor 162 and a driver identification E1 are released. The first configurable filter 131 is shown in FIG. 9 as a function symbol and implemented, for example, by authorization software in central unit 130.

Central unit 130 in the public mode M_{C} is configured to activate a second configurable filter 132. A second selection of measured data M4, M6 and/or of input data E3 for transmission by transceiver 140 is released by means of the second configurable filter 132. In the exemplary embodiment of FIG. 9, in the public mode M_{C} the image data M4 of camera 164 and the position data M6 from position sensor 166 and a driving style category E3 are released for transmission. The second configurable filter 132 is shown in FIG. 9 as a function symbol and implemented, for example, by authorization software in central unit 130. The activation of the first configurable filter 131 or second configurable filter 132 is symbolized in FIG. 9 by a switch 133.

In the exemplary embodiment of FIG. 9, central unit 130 has a configuration mode M_{K}. Central unit 130 is configured to activate in the configuration mode M_{K} an input mask to configure the first configurable filter 131 and/or second configurable filter 132. Alternatively, the configuration of filters 131, 132 can be fixedly predetermined or programmed via a connection.

Central unit 130 is configured to transmit measured data M2, M4, M6 and/or input data E1, E3 released by means of the first configurable filter 131 or second configurable filter 132, when an inquiry Q is received over transceiver 140 about the particular measured data M2, M4, M6 and/or input data E1, E3. For example, camera 164 is selected by the request from a vehicle 440 of the community and then the image data M4 are transmitted via server 300 to vehicle 440 and displayed there.

The enormous need for mobility will lead to an advanced management of parking spaces. This will be reached by the Urban Swarm Community Concept, which consistently uses the intelligence of the swarm. In the following the swarm is used to manage the parking in city streets.

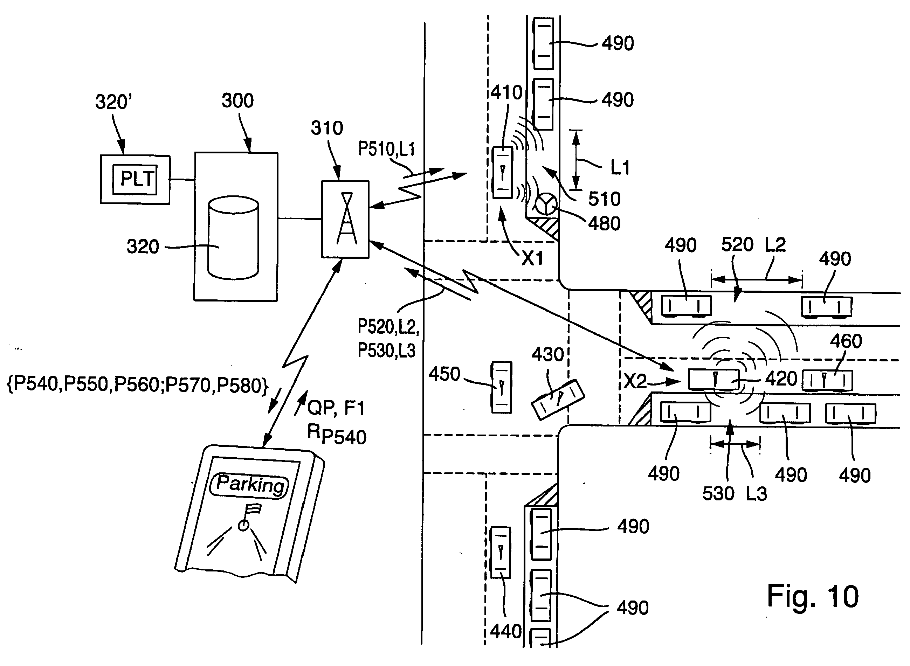

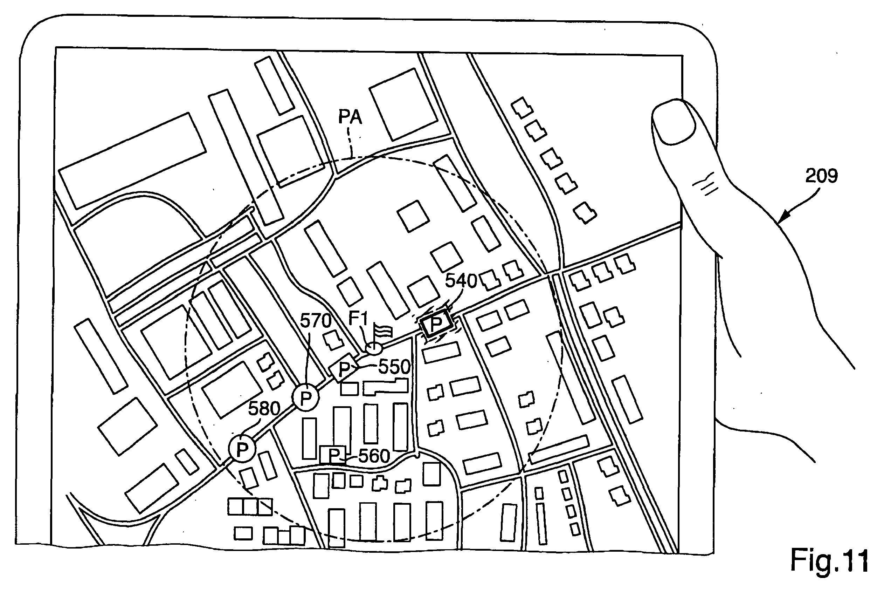

As shown in the FIGS. 10 and 11 one embodiment according to the invention provides a system and a method to identify quasi real time vacancies for parking at the roadside as they occur randomly in the cities. These vacancies are made available to other traffic members in the community of the swarm. Such a member can be guided to such vacancy.

According to the invention, a method for navigation is based on a
plurality of vehicles 410, 420, 430, 440, 450, 460. The vehicles 410, 420, 430, 440, 450, 460 shown in FIG. 10 are members of the community. Each vehicle 410, 420, 430, 440, 450, 460 is connectable to a server 300 via a radio communication link. In FIG. 10 a base station 310 of a radio communication network is shown, which is connected to the server 300. The server 300 is not only specified as a hardware unit, but also could be a virtual server or be part of cloud.

Each of the plurality of vehicles 410, 420, 430, 440, 450, 460 concurrently determines its current position X1, X2. In FIG. 10 all vehicle 410, 420 are moving. The vehicles 490 are objects. The vehicles 490 and the other object 480 are not moving and are parking or stationary. In FIG. 10 three vacancies 510, 520, 530 for parking are shown. These vacancies 510, 520, 530 are a gap between two parked vehicles 490 or between a parked vehicle 490 and the other object 480, e.g. a flower tub.

In the embodiment according to the invention shown in FIG. 10 a vehicle 410 is currently determining one vacancy 510 for parking based on recognized objects 480, 490 at the roadside. The system of the vehicle 410 has an object recognition device 161, 164 as shown in FIG. 7. According to one embodiment of FIG. 7 a video camera 164 and/or a radar sensor 161 are an essential part of an object recognition device. As shown in FIG. 10 another vehicle 420 is currently determining one vacancy 520 for parking based on recognized objects 490 at the left roadside and one vacancy 530 for parking based on recognized objects 490 at the right roadside.

The vehicle 410 may determine its current position X1 based on GPS-satellite signals. Depending on its current position X1 the vehicle 410 may determine the position P510 of the vacancy. Correspondingly the vehicle 420 is determining positions P520 and P530 of the vacancies 520, 530 based on its current position X2. As shown in FIG. 10 both vehicles 410, 420 are configured to transmit the positions P510, P520, P530 of the vacancies 510, 520, 530 together with the length L1, L2, L3 of each vacancy 510, 520, 530 to the connected server 300 via the base station 310.

The vacancies 510, 520, 530 for parking are received by the server 300. The server 300 enables the storing of the positions P510, P520, P530 of the vacancies 510, 520, 530 in an internal storage 320 or external storage 320' connected to the server 300. The storage may be organized as a database. The aforementioned steps describe how the vacancies 510, 520, 530 for parking are fed into the storage 320, 320'. In the following the steps concerning the request and retrieval of the positions P510, P520, P530 of the vacancies 510, 520, 530 are described.

According to the embodiment according to the invention in FIGS. 10 and 11 an input by a user 209 of a query QP is determined. The query QP concerns vacancies for parking. The query QP together with a final destination F1 is transmitted from the user 209 to the server 300 via the base station 310. In the easiest case positions P540, P550, P560, P570, P580 of vacancies 540, 550, 560, 570, 580 are transmitted from the server 300 to the user 209. FIG. 11 shows a map with an area PA around the final destination F1. Positions P540, P550, P560, P570, P580 of vacancies 540, 550, 560, 570, 580 are shown by parking symbols within the area PA. The symbols may further be used for navigation. According to the embodiment shown in FIG. 11 a selection of a vacancy 540 for parking is determined, if the user 209 is touching the associated symbol. The position P540 of the vacancy 540 is set to be a new final destination P540. The route guidance to the new final destination P540 is started afterwards. It is also possible to calculate a round tour passing several or all of the positions P540, P550, P560, P570, P580 of vacancies 540, 550, 560, 570, 580, e.g. after reaching the final destination F1. After reaching the vacancy an occupation information may be sent from the user 209 to the server 300, if the position P540 is occupied by another vehicle or if a reaching of the position P540 of the vacancy 540 for parking by the user 209 is determined. After the server 300 has received the occupation information the stored position P540 may be deleted in the storage 320, 320' by the server 300. According to one embodiment the vacancies 540, 550, 560, 570, 580 for parking may be concurrently updated. The updating may be terminated, when a parking of the vehicle of the user 209 is detected or if the user switches off the updating, e.g. by a respective input. The area PA may be determined geographically, e.g. by determining each distance to the final destination F1 and comparing it with an area threshold. Alternatively the area PA is defined by a number of closest vacancies, e.g. the position of the ten closest vacancies define the area PA.

According to one embodiment the user 209 in FIG. 11 may select a vacancy for reservation. First a selection for reservation is determined, e.g. if the user 209 is touching a symbol of one vacancy for parking. Afterwards a reservation information R_{P540} is transmitted from the user 209 to the server 300 as shown in FIG. 10. E.g. for a period of time this vacancy is not retrievable for other members of the community.

To prevent misuse of the data gathered by the community the access may be limited. According to one embodiment an authentication of the user 209 to be a member of a group legitimated to retrieve vacancies 540, 550, 560, 570, 580 occurs. The positions P540, P550, P560, P570, P580 are transmitted only after the authentication is successfully completed.

According to one embodiment of FIG. 10 a length L1, L2, L3 of each vacancy 510, 520, 530 is determined and transmitted along with each position P510, P520, P530 from the respective vehicle 410, 420 to the connected server 300. Based on the request received the server 300 may transmit only that vacancies suitable for the user 209. Alternatively all positions of all vacancies are transmitted to the user along with the respective length of each vacancy. In this case the vacancies may be selected by a user's program. In each case each vacancy may be selected depending on its lengths L1, L2, L3. After selection only fitting vacancies may be displayed for navigation.
In dense populated urban areas a management of vacancies for parking is possible. According to the invention, a vacancy allocation is determined by minimizing walking distances between final destinations F1 and the positions of the vacancies 540, 550, 560, 570, 580 for a plurality of vehicles having final destinations adjacent to each other. Next the positions P540, P550, P560, P570, P580 of vacancies 540, 550, 560, 570, 580 in each area PA are transmitted to the vehicle based on the vacancy allocation.

According to one embodiment the behaviour of other vehicles, which are not a member of the community are taken into account. Additionally a point in time of the determination of the vacancy 510, 520, 530 may be determined and the point in time may be stored along with the position P510, P520, P530 by the server 300. Afterwards the positions P540, P550, P560, P570, P580 of vacancies 540, 550, 560, 570, 580 and respective points of time are transmitted from the server 300 to the user 209. The points of time could be used for navigation in several ways. In FIG. 11 visualization is shown. Using at least one time threshold vacancies may be categorized comparing a difference of the points of time and the current time with the at least one time threshold. In FIG. 11 three categories are shown, wherein the vacancy 540 has the youngest point of time and the vacancies 570, 580 are the oldest ones. Another threshold - e.g. 24 hours - may be used to cancel vacancies. Alternatively recognitions of a vacancy may be counted and compared with counting thresholds to categorize vacancies.

If parking in a vacancy is not allowed e.g. due to traffic regulations, the user 209 may input respective information. An input associated with a cancelation of a vacancy by the user 209 may be determined. Based on the determined cancelation input respective data may be sent to the server and information concerning parking prohibition may be stored.

The invention is not limited to the shown embodiment variants in FIGS. 1 through 11. For example, it is possible to combine various explained functions of the system. It is likewise possible to provide different functions for other applications, for example, a fleet of trucks.

## Claims

1. A method for navigation based on a plurality of vehicles (100, 410, 420, 430, 440, 450, 460) connectable to a server (300), comprising the steps:
- determining a current position (X1, X2) of a vehicle (410, 420);
- determining a vacancy (510, 520, 530) for parking based on recognized objects (480, 490) at the roadside by an object recognition device (161, 164) of the vehicle (410, 420);
- transmitting of positions (P510, P520, P530) of vacancies (510, 520, 530) from the vehicle (410, 420) to the server (300);
- storing the positions (P510, P520, P530) of vacancies (510, 520, 530) by the server (300);
- determining an input of a query (QP) of vacancies for parking by a user (209);
- transmitting the query (QP) together with a final destination (F1) from the user (209) to the server (300);
**characterized in that** the method further comprises the steps:
- calculating a vacancy allocation by minimizing walking distances between final destinations (F1) and the positions of the vacancies (540, 550, 560, 570, 580) for a plurality of vehicles having final destinations (F1) adjacent to each other; and
- transmitting positions (P540, P550, P560, P570, P580) of the vacancies (540, 550, 560, 570, 580) in an area (PA) around the final destination (F1) based on the vacancy allocation from the server (300) to the user (209) for navigation.

2. A method according to claim 1, comprising the step:
- determining a selection of a vacancy (540) for parking as a new final destination (P540) and starting route guidance to the new final destination (P540).

3. A method according to one of the preceding claims, comprising the steps:
- determining a selection of a vacancy (540) for reservation, and
- transmitting a reservation information (R_{P540}) from the user (209) to the server (300).

4. A method according to one of the preceding claims, comprising the steps:
- authenticating the user (209) to be a member of a group legitimated to retrieve vacancies (540, 550, 560, 570, 580), and
- transmitting the positions (P540, P550, P560, P570, P580) after succeeding the authentication.

5. A method according to one of the preceding claims, comprising the steps:
- sending an occupation information from the user (209) to the server (300), if the position (P540) is occupied by another vehicle or if a reaching of the position (P540) by the user (209) is determined; and
- deleting the stored position (P540) by the server (300).

6. A method according to one of the preceding claims, comprising the steps:
- determining a length (L1, L2, L3) of the vacancy (510, 520, 530); and
- transmitting lengths (L1, L2, L3) along with positions (P510, P520, P530) of vacancies (510, 520, 530) from the vehicle (410, 420) to the server (300).

7. A method according to one of the preceding claims, comprising the steps:
- determining a point in time of the determination of the vacancy (510, 520, 530) and storing the point of time along with the position (P510, P520, P530) by the server (300); and
- transmitting positions (P540, P550, P560, P570, P580) of vacancies (540, 550, 560, 570, 580) and respective points of time from the server (300) to the user (209).

8. System for navigation for a plurality of vehicles (410, 420, 430, 440, 450, 460),
- comprising a server (300), connectable to the vehicles (410, 420, 430, 440, 450, 460) via a network,
- wherein the server (300) is configured to receive positions (P510, P520, P530) of vacancies (510, 520, 530) for parking, the vacancies being determined by object recognition and sent by the vehicle (410, 420, 430, 440, 450, 460),
- wherein the server (300) is configured to store the received positions (P510, P520, P530) of vacancies (510, 520, 530) in a storage (320, 320'),
- wherein the server (300) is configured to receive a request (QP) for vacancies (540, 550, 560, 570, 580) entered by a user (209) and is configured to receive a respective final destination (F1),
**characterized in that**
the server (300) is configured to calculate a vacancy allocation by minimizing walking distances between final destinations (F1) and the positions of the vacancies (540, 550, 560, 570, 580) for a plurality of vehicles having final destinations (F1) adjacent to each other, and
- wherein the server (300) is configured to send positions (P540, P550, P560, P570, P580) of the vacancies (540, 550, 560, 570, 580) in an area (PA) around the final destination (F1) based on the vacancy allocation to the user (209) for navigation.

## Patentansprüche

1. Verfahren zur Navigation basierend auf einer Vielzahl von Fahrzeugen (100, 410, 420, 430, 440, 450, 460), die mit einem Server (300) verbunden werden kann, folgende Schritte umfassend:
- Bestimmen einer aktuellen Position (X₁, X₂) eines Fahrzeugs (410, 420);
- Bestimmen einer Parklücke (510, 520, 530) zum Parken auf Grundlage erkannter Objekte (480, 490) am Straßenrand durch eine Objekterkennungsvorrichtung (161, 164) des Fahrzeugs (410, 420);
- Übertragen von Positionen (P₅₁₀, P₅₂₀, P₅₃₀) von Parklücken (510, 520, 530) von dem Fahrzeug (410, 420) an den Server (300);
- Speicher der Positionen (P₅₁₀, P₅₂₀, P₅₃₀) von Parklücken (510, 520, 530) durch den Server (300);
- Bestimmen einer Eingabe einer Anfrage (QP) nach Parklücken zum Parken durch einen Benutzer (209);
- Übertragen der Anfrage (QP) zusammen mit einem Endzielort (F₁) von dem Benutzer (209) an den Server (300);
**dadurch gekennzeichnet, dass** das Verfahren ferner folgende Schritte umfasst:
- Berechnen einer Parklückenzuweisung durch Minimieren der Laufweite zwischen Endzielorten (F₁) und den Positionen der Parklücken (540, 550, 560, 570, 580) für eine Vielzahl von Fahrzeugen mit zueinander benachbarten Endzielorten (F₁); und
- Übertragen von Positionen (P₅₄₀, P₅₅₀, P₅₆₀, P₅₇₀, P₅₈₀₃) der Parklücken (540, 550, 560, 570, 580) in einem Bereich (PA) um den Endzielort (F₁) auf Grundlage der Parklückenzuweisung von dem Server (300) an den Benutzer (209) zur Navigation.

2. Verfahren nach Anspruch 1, folgenden Schritt umfassend:
- Bestimmen einer Auswahl einer Parklücke (540) zum Parken als ein neues Endzielort (P₅₄₀) und Starten von Routenführung zu dem neuen Endzielort (P₅₄₀).

3. Verfahren nach einem der vorangehenden Ansprüche, folgende Schritte umfassend:
- Bestimmen einer Auswahl einer Parklücke (540) zur Reservierung, und
- Übertragen von Reservierungsinformationen (R_{P540}) von dem Benutzer (209) an den Server (300).

4. Verfahren nach einem der vorangehenden Ansprüche, folgende Schritte umfassend:
- Authentifizieren des Benutzers (209) als ein Mitglied einer Gruppe, die berechtigt ist, Parklücken (540, 550, 560, 570, 580) abzurufen, und
- Übertragen der Positionen (P₅₄₀, P₅₅₀, P₅₆₀, P₅₇₀, P₅₈₀) nach erfolgreichem Authentifizieren.

5. Verfahren nach einem der vorangehenden Ansprüche, folgende Schritte umfassend:
- Senden von Belegungsinformationen von dem Benutzer (209) an den Server (300), wenn die Position (P₅₄₀) von einem anderen Fahrzeug belegt ist oder wenn ein Erreichen der Position (P₅₄₀) durch den Benutzer (209) bestimmt wird; und
- Löschen der gespeicherten Position (P₅₄₀) durch den Server (300).

6. Verfahren nach einem der vorangehenden Ansprüche, folgende Schritte umfassend:
- Bestimmen einer Länge (L₁, L₂, L₃) der Parklücke (510, 520, 530); und
- Übertragen von Längen (L₁, L₂, L₃) zusammen mit Positionen (P₅₁₀, P₅₂₀, P₅₃₀) von Parklücken (510, 520, 530) von dem Fahrzeug (410, 420) an den Server (300).

7. Verfahren nach einem der vorangehenden Ansprüche, folgende Schritte umfassend:
- Bestimmen eines Zeitpunkts der Bestimmung der Parklücke (510, 520, 530) und Speichern des Zeitpunkts zusammen mit der Position (P₅₁₀, P₅₂₀, P₅₃₀) durch den Server (300); und
- Übertragen von Positionen (P₅₄₀, P₅₅₀, P₅₆₀, P₅₇₀, P₅₈₀) von Parklücken (540, 550, 560, 570, 580) und jeweiligen Zeitpunkten von dem Server (300) an den Benutzer (209).

8. System zur Navigation für eine Vielzahl von Fahrzeugen (410, 420, 430, 440, 450, 460),
- umfassend einen Server (300), der mit den Fahrzeugen (410, 420, 430, 440, 450, 460) über ein Netzwerk verbunden werden kann,
- wobei der Server (300) dazu konfiguriert ist, Positionen (P₅₁₀, P₅₂₀, P₅₃₀) von Parklücken (510, 520, 530) zum Parken zu empfangen, wobei die Parklücken durch Objekterkennung bestimmt und durch das Fahrzeug (410, 420, 430, 440, 450, 460) gesendet werden,
- wobei der Server (300) dazu konfiguriert ist, die empfangenen Positionen (P₅₁₀, P₅₂₀, P₅₃₀) von Parklücken (510, 520, 530) in einem Speicher (320, 320') zu speichern,
- wobei der Server (300) dazu konfiguriert ist, eine Anfrage (QP) nach Parklücken (540, 550, 560, 570, 580), die von einem Benutzer (209) eingegeben wird, zu empfangen, und dazu konfiguriert ist, einen jeweiligen Endzielort (F1) zu empfangen, **dadurch gekennzeichnet, dass**
der Server (300) dazu konfiguriert ist, eine Parklückenzuweisung durch Minimieren der Laufweiten zwischen Endzielorten (F1) und den Positionen der Parklücken (540, 550, 560, 570, 580) für eine Vielzahl von Fahrzeugen mit zueinander benachbarten Endzielorten (F1) zu berechnen, und
- wobei der Server (300) dazu konfiguriert ist, Positionen (P₅₄₀, P₅₅₀, P₅₆₀, P₅₇₀, P₅₈₀) der Parklücken (540, 550, 560, 570, 580) in einem Bereich (PA) um den Endzielort (F1) auf Grundlage der Parklückenzuweisung an den Benutzer (209) zur Navigation zu senden.

## Revendications

1. Procédé pour la navigation sur la base d'une pluralité de véhicules (100, 410, 420, 430, 440, 450, 460) pouvant se connecter à un serveur (300), comprenant les étapes suivantes :
- la détermination d'une position actuelle (X1, X2) d'un véhicule (410, 420) ;
- la détermination d'une place libre (510, 520, 530) pour le stationnement sur la base d'objets reconnus (480, 490) sur le bord de la route grâce à un dispositif de reconnaissance d'objets (161, 164) du véhicule (410, 420) ;
- la transmission de positions (P510, P520, P530) de places libres (510, 520, 530) par le véhicule (410, 420) à l'attention du serveur (300) ;
- le stockage des positions (P510, P520, P530) de places libres (510, 520, 530) par le serveur (300) ;
- la détermination d'une saisie d'une demande (QP) de places libres pour le stationnement par un utilisateur (209) ;
- la transmission de la demande (QP) conjointement avec une destination finale (F1) par l'utilisateur (209) à l'attention du serveur (300) ;
**caractérisé en ce que** le procédé comprend en outre les étapes suivantes :
- le calcul d'une affectation de place libre en minimisant les distances de marche entre des destinations finales (F1) et les positions des places libres (540, 550, 560, 570, 580) pour une pluralité de véhicules ayant des destinations finales (F1) adjacentes les unes des autres ; et
- la transmission des positions (P540, P550, P560, P570, P580) des places libres (540, 550, 560, 570, 580) dans une zone (PA) autour de la destination finale (F1) sur la base de l'affectation de place libre par le serveur (300) à l'attention de l'utilisateur (209) pour la navigation.

2. Procédé selon la revendication 1, comprenant l'étape suivants :
- la détermination d'une sélection d'une place libre (540) pour le stationnement en tant qu'une nouvelle destination finale (P540) et le démarrage d'un guidage routier vers la nouvelle destination finale (P540).

3. Procédé selon l'une des revendications précédentes, comprenant les étapes suivantes :
- la détermination d'une sélection d'une place libre (540) pour une réservation, et
- la transmission d'une information de réservation (R_{P54o}) par l'utilisateur (209) à l'attention du serveur (300).

4. Procédé selon l'une des revendications précédentes, comprenant les étapes suivantes :
- l'authentification de l'utilisateur (209) comme étant un membre d'un groupe autorisé à récupérer des places libres (540, 550, 560, 570, 580), et
- la transmission des positions (P540, P550, P560, P570, P580) une fois l'authentification réussie.

5. Procédé selon l'une des revendications précédentes, comprenant les étapes suivantes :
- l'envoi d'une information d'occupation par l'utilisateur (209) à l'attention du serveur (300) si la position (P540) est occupée par un autre véhicule ou si une atteinte de la position (P540) par l'utilisateur (209) est déterminée ; et
- la suppression de la position stockée (P540) par le serveur (300).

6. Procédé selon l'une des revendications précédentes, comprenant les étapes suivantes :
- la détermination d'une longueur (L1, L2, L3) de la place libre (510, 520, 530) ; et
- la transmission des longueurs (L1, L2, L3) conjointement avec des positions (P510, P520, P530) de places libres (510, 520, 530) par le véhicule (410, 420) à l'attention du serveur (300).

7. Procédé selon l'une des revendications précédentes, comprenant les étapes suivantes :
- la détermination d'un moment de la détermination de la place libre (510, 520, 530) et le stockage du moment conjointement avec la position (P510, P520, P530) par le serveur (300) ; et
- la transmission des positions (P540, P550, P560, P570, P580) des places libres (540, 550, 560, 570, 580) et des moments respectifs par le serveur (300) à l'attention de l'utilisateur (209).

8. Système pour la navigation pour une pluralité de véhicules (410, 420, 430, 440, 450, 460),
- comprenant un serveur (300) pouvant se connecter aux véhicules (410, 420, 430, 440, 450, 460) via un réseau,
- dans lequel le serveur (300) est configuré pour recevoir des positions (P510, P520, P530) de places libres (510, 520, 530) pour le stationnement, les places libres étant déterminées par une reconnaissance d'objets et envoyées par le véhicule (410, 420, 430, 440, 450, 460),
- dans lequel le serveur (300) est configuré pour stocker les positions (P510, P520, P530) des places libres (510, 520, 530) reçues dans une mémoire (320, 320'),
- dans lequel le serveur (300) est configuré pour recevoir une demande (QP) pour des places libres (540, 550, 560, 570, 580) saisie par un utilisateur (209) et est configuré pour recevoir une destination finale (F1) respective,
**caractérisé en ce que**
le serveur (300) est configuré pour calculer une affectation de place libre en minimisant des distances de marche entre des destinations finales (F1) et les positions des places libres (540, 550, 560, 570, 580) pour une pluralité de véhicules ayant des destinations finales (F1) adjacentes les unes des autres, et
- dans lequel le serveur (300) est configuré pour envoyer des positions (P540, P550, P560, P570, P580) des places libres (540, 550, 560, 570, 580) dans une zone (PA) autour de la destination finale (F1) sur la base de l'affectation de place libre à l'attention de l'utilisateur (209) pour la navigation.
